(19) Europäisches Patentamt / European Patent Office / Office européen des brevets

(11) **EP 4 519 072 B1**

(12) **FASCICULE DE BREVET EUROPEEN**

(45) Date de publication et mention de la délivrance du brevet:
**31.12.2025 Bulletin 2026/01**

(21) Numéro de dépôt: **23723896.9**

(22) Date de dépôt: **01.05.2023**

(51) Classification Internationale des Brevets (IPC):
**B29C 70/54** *(2006.01)* **B29C 37/00** *(2006.01)*

(52) Classification Coopérative des Brevets (CPC):
**B29C 70/541;** B29C 37/0064

(86) Numéro de dépôt international:
**PCT/EP2023/061433**

(87) Numéro de publication internationale:
**WO 2023/213752 (09.11.2023 Gazette 2023/45)**

(54) **OUTIL POUR LE MAROUFLAGE D'UN PLI DE MATIERE TEL QU'UN PREIMPREGNE ET PROCEDE DE MAROUFLAGE ASSOCIE**

WERKZEUG ZUM GLÄTTEN EINER MATERIALSCHICHT WIE ETWA EIN PREPREG UND ZUGEHÖRIGES GLÄTTUNGSVERFAHREN

TOOL FOR SMOOTHING A PLY OF MATERIAL SUCH AS A PREPREG, AND ASSOCIATED SMOOTHING METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.05.2022 FR 2204167**

(43) Date de publication de la demande:
**12.03.2025 Bulletin 2025/11**

(73) Titulaire: **Institut de Recherche Technologique Jules Verne**
**44340 Bouguenais (FR)**

(72) Inventeurs:
• **MELENDEZ GOALARD, Leonardo**
**44000 NANTES (FR)**
• **LE HETET, Thomas**
**44118 LA CHEVROLIERE (FR)**

(74) Mandataire: **Alatis**
**3, rue Paul Escudier**
**75009 Paris (FR)**

(56) Documents cités:
DE-A1- 102013 007 382 US-A- 3 717 899
US-A- 4 337 105

**Description**

**DOMAINE TECHNIQUE DE L'INVENTION**

L'invention concerne, de façon générale, le domaine technique du drapage de plis composites.

L'invention se rapporte plus spécifiquement à un outil de marouflage, notamment pour le marouflage d'au moins un pli de matière tel qu'un préimprégné destiné à former une partie au moins d'une pièce composite, et un procédé de marouflage associé.

**ÉTAT DE LA TECHNIQUE ANTÉRIEURE**

Comme cela est bien connu de l'art antérieur, une pièce en matériau composite peut être réalisée à partir d'un renfort fibreux pré-imprégné de résine. De tels renforts fibreux peuvent être par exemple en carbone, en aramide, ou composé de tout autre matériau adapté en fonction de l'usage souhaité de la pièce. La résine peut être de différents types tels qu'une résine epoxy ou polyester ou similaire.

Dans une première phase dite de drapage, des plis pré-imprégnés de renfort fibreux sont disposés sur une contre-forme afin de former une pièce préliminaire appelée préforme ou ébauche. Durant cette stratification, il est habituel d'utiliser un rouleau « débulleur », aussi appelé « outil de marouflage », afin de chasser l'air du stratifié pour rendre homogène les couches de renfort fibreux entre-elles. La pièce préliminaire peut ensuite être pré-consolidée sous vide dans une étape optionnelle dite de compactage.

Dans une phase suivante, dite d'habillage, la pièce préliminaire est disposée sur un outillage. Durant cette étape, la pièce préliminaire est recouverte d'un empilement de films (appelé habillage) dont les fonctions diffèrent selon la pièce souhaitée. L'habillage peut comprendre plusieurs films tels qu'un tissu à délaminer, disposé généralement uniquement sur la pièce préliminaire, un film étanche, un tissu traînant pour couvrir le film étanche et/ou bâche formant vessie afin d'assurer l'étanchéité de l'habillage.

Durant une troisième phase, dite de polymérisation, la pièce préliminaire habillée est disposée dans une enceinte mise au vide et soumise à un cycle de température et de pression afin d'être consolidée et obtenir une pièce dite pièce brute en matériau composite. Après polymérisation, la pièce brute est démoulée et contrôlée (défectivité, état de surface et dimensions).

Aujourd'hui les outils de marouflage utilisés dans le domaine du drapage composite sont de type vectoriel, c'est-à-dire qu'ils se déplacent selon un axe. C'est le cas par exemple lorsqu'un outil présente la forme d'un rouleau. De telles formes sont avantageuses en ce qu'elles présentent des surfaces de contact importantes permettant de maroufler une surface relativement grande de plis pré-imprégnés.

Selon leur configuration, ces outils ne peuvent toutefois pas tourner ou changer de trajectoire sans risque de cisailler la matière et potentiellement l'endommager.

Par ailleurs, pour maroufler des angles, positifs ou négatifs, et/ou des appuis ponctuels, des outils de type appui ponctuel avec la forme adaptée sont également nécessaires. Ceci impose généralement l'utilisation de plusieurs outils différents et adaptés spécifiquement à des zones prédéterminées.

Il en résulte que l'étape de marouflage présente souvent un faible rendement du fait notamment des trajectoires de retour évitant le cisaillement de la matière et des changements d'outils.

Suite à l'utilisation de ces outils, une mise sous vide globale est effectuée via une bâche et un environnement de drainage. En plus de chasser l'air du stratifié pour rendre homogène les couches de renfort fibreux entre-elles, l'étape de marouflage permet de limiter l'apparition de plissures de plis de renforts fibreux, qui généreront des écarts de précision lors du drapage et des surépaisseurs locales dans le matériau qui seraient figés lors cette mise sous vide.

Le document DE 10 2013 007382 A1 décrit un procédé de marouflage par un outil de marouflage connu de l'art antérieur.

**EXPOSE DE L'INVENTION**

L'invention vise à remédier à tout ou partie des inconvénients de l'état de la technique en proposant notamment une solution permettant de s'affranchir d'un déplacement purement vectoriel de l'outil et n'ayant pas besoin de s'écarter de la surface de drapage pour éviter le cisaillement de la matière.

Un autre objectif recherché est de limiter le besoin de changer d'outils et d'obtenir un outil plus polyvalent.

Pour ce faire est proposé, selon un premier aspect de l'invention, un procédé de marouflage d'une surface à maroufler par un outil de marouflage comportant un support et une boule de marouflage retenue par le support de façon à pouvoir tourner, la boule de marouflage étant élastiquement déformable, remarquable en ce que l'on déplace la boule de marouflage sur la surface à maroufler en maintenant une interface de contact entre la boule de marouflage et la surface à maroufler ayant une aire supérieure à 5% ( $\pi \frac{D^2}{4}$ ), de préférence supérieure à 10% ( $\pi \frac{D^2}{4}$ ) et/ou inférieure à 90% ( $\pi \frac{D^2}{4}$ ), de préférence inférieure à 30% ( $\pi \frac{D^2}{4}$ ), où D est le diamètre de la boule de marouflage.

Grâce à une telle combinaison de caractéristiques, la boule de marouflage peut se déformer tout en roulant de sorte à ce qu'elle ne soit pas en contact quasi ponctuel avec la surface à maroufler, mais en contact surfacique, dont la surface est suffisante pour garantir le marouflage de la surface de drapage. En effet, l'air de l'interface de contact doit être suffisamment faible pour garantir la bonne rotation de la boule de marouflage, mais suffisamment grande pour garantir l'efficacité du marouflage.

Selon un mode de réalisation, on déplace la boule de marouflage sur la surface à maroufler suivant une trajectoire présentant au moins une portion courbe.

Selon un mode de réalisation, on déplace la boule de marouflage sur la surface à maroufler en faisant rouler la boule de marouflage sur la surface à maroufler.

Selon un mode de réalisation, on déplace la boule de marouflage sur la surface à maroufler en maintenant constant une composante normale d'une résultante des efforts exercés par la boule de marouflage sur la surface à maroufler ou sans faire varier la composante normale de la résultante des efforts exercés par la boule de marouflage sur la surface à maroufler dans des proportions supérieures à 5%.

Selon un mode de réalisation, on déplace la boule de marouflage sur la surface à maroufler en faisant varier une composante normale d'une résultante des efforts exercés par la boule de marouflage sur la surface à maroufler dans des proportions supérieures à 20%.

Selon un mode de réalisation, pour déplacer la boule de marouflage, on guide la boule de marouflage à l'aide d'une cage de l'outil de marouflage enchâssant la boule de marouflage. Une telle caractéristique permet de laisser libre en rotation la boule de marouflage dans sa cage portée par l'outil de marouflage.

Selon un autre aspect de l'invention, celle-ci a trait à un outil de marouflage comprenant un support et une boule de marouflage retenue par le support de façon à pouvoir tourner, la boule de marouflage étant configurée de sorte que pour une pression prédéterminée de la boule de marouflage sur une surface à maroufler, la boule de marouflage se déforme élastiquement pour garantir un contact surfacique formant une surface d'appui de la boule de marouflage contre la surface à maroufler.

Selon un mode de réalisation, la boule de marouflage est enchâssée dans une cage définie par le support de façon à pouvoir tourner dans la cage sans la quitter.

Selon un mode de réalisation, la cage comprend une pluralité de griffes de maintien réparties de façon homogène autour de la boule de marouflage espacées deux à deux par des interstices.

Selon un mode de réalisation, les griffes de maintien sont déformables élastiquement.

Selon un mode de réalisation, la cage est élastiquement déformable de sorte que la boule de marouflage est enchâssée par emboîtement élastique et de façon amovible dans ladite cage. De cette manière, la boule de marouflage peut être facilement changée, par exemple pour une boule de marouflage présentant une déformation élastique différente ou pour une réparation ou maintenance. Une telle structure est également simple à réaliser et peu onéreuse. De préférence, la cage, et de préférence le support définissant la cage, est réalisée monobloc, c'est-à-dire en un seul tenant. De préférence encore, la cage, et de préférence le support définissant la cage, est fabriquée par un procédé de fabrication additive, également appelé « impression 3D ».

Selon un mode de réalisation, le support présente, de préférence à une extrémité proximale opposée à la cage, une interface de fixation à un bras de robot.

Selon un mode de réalisation, la cage comporte des corps roulants de sorte à rouler contre une piste portée par une surface de la boule de marouflage. De tels corps roulant venant en appuis contre la bille permet de limiter grandement tout frottement, garantissant la libre rotation de la boule de marouflage durant une opération de marouflage. Le risque que la boule de marouflage glisse sur la surface à maroufler est ainsi très fortement limité.

Selon un mode de réalisation, le support présente une surface de contact avec la boule de marouflage présentant un coefficient de frottement sec statique sur le support supérieur ou égal à 0,1 et/ou inférieur ou égal à 0,4, de préférence inférieur ou égal à 0,2.

Selon un mode de réalisation, la surface de contact entre la boule de marouflage et le support a une aire supérieure $\pi \dfrac{D^2}{40}$ et/ou inférieure à $\pi \dfrac{D^2}{12}$, où D est le diamètre de la boule de marouflage. Une telle caractéristique apparaît comme un bon compromis, surtout si la cage ne comporte pas de corps roulants pour rouler contre une piste portée par une surface de la boule de marouflage.

Selon un mode de réalisation, le support est constitué d'un matériau thermoplastique.

Selon un mode de réalisation, la boule de marouflage comprend un noyau et une coque, de préférence en matériau(x) thermoplastique(s), enveloppant le noyau.

Selon un mode de réalisation, le noyau de la boule de marouflage présente une dureté Shore supérieure ou égale à 15A, de préférence supérieure ou égale à 25A et/ou inférieure ou égale à 50A, de préférence inférieure ou égale à 40A.

Selon un mode de réalisation, le noyau de la boule de marouflage est composé à partir d'élastomère(s) ou de silicone, de préférence est constitué de matériau(x) élastomère(s) et/ou silicone.

Selon un mode de réalisation, la boule de marouflage comprend un diamètre supérieur ou égal à 20mm, de préférence supérieur ou égal à 30mm et/ou inférieur ou égal à 60mm, de préférence inférieur ou égal à 50mm.

Selon un mode de réalisation, la pression prédéterminée pour déformer élastiquement la boule de marouflage est supérieure ou égale à 10 N, de préférence supérieure ou égale à 40 N et/ou inférieure ou égale à 200 N, de préférence inférieure ou égale à 100 N.

Selon un autre aspect, l'invention concerne également un bras de robot, par exemple pour un cobot, remarquable en ce qu'il comprend un outil de marouflage tel que décrit ci-avant.

## BRÈVE DESCRIPTION DES FIGURES

D'autres caractéristiques et avantages de l'invention ressortiront à la lecture de la description qui suit, en référence aux figures annexées, qui illustrent :

- figure 1 : une vue d'un cobot muni d'un outil de marouflage selon un mode de réalisation ;

- figure 2 : une vue schématique d'un outil de marouflage selon un mode de réalisation durant une étape de déplacement contre une surface à maroufler ;

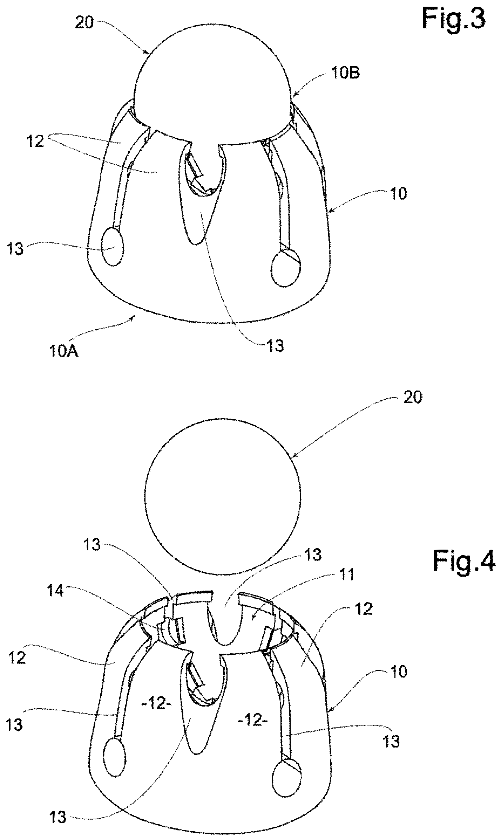

- figure 3 : une vue en perspective isométrique d'un outil de marouflage selon un mode de réalisation, dans une position assemblée d'une boule de marouflage dans un support de l'outil ;

- figure 4 : une vue éclatée et en perspective isométrique de l'outil de marouflage de la figure 3 ;

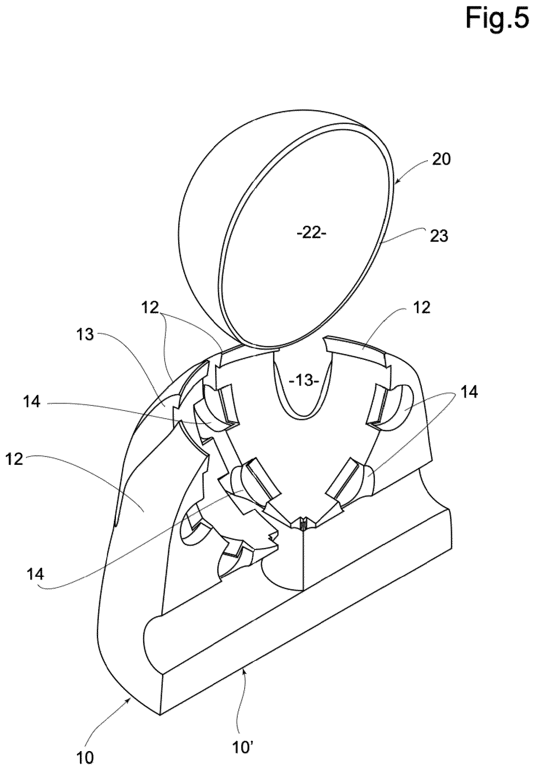

- figure 5 : une vue en coupe de la figure 4 ;

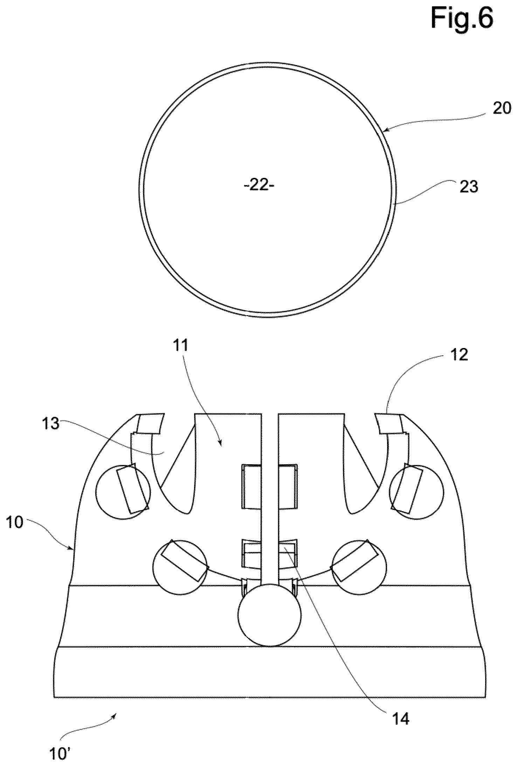

- figure 6 : une vue de face de la coupe de la figure 5 ;

- figure 7 : une vue d'un exemple de trajectoire de l'outil de marouflage contre une surface à maroufler.

Pour plus de clarté, les éléments identiques ou similaires sont repérés par des signes de référence identiques sur l'ensemble des figures.

## DESCRIPTION DÉTAILLÉE D'UN MODE DE RÉALISATION

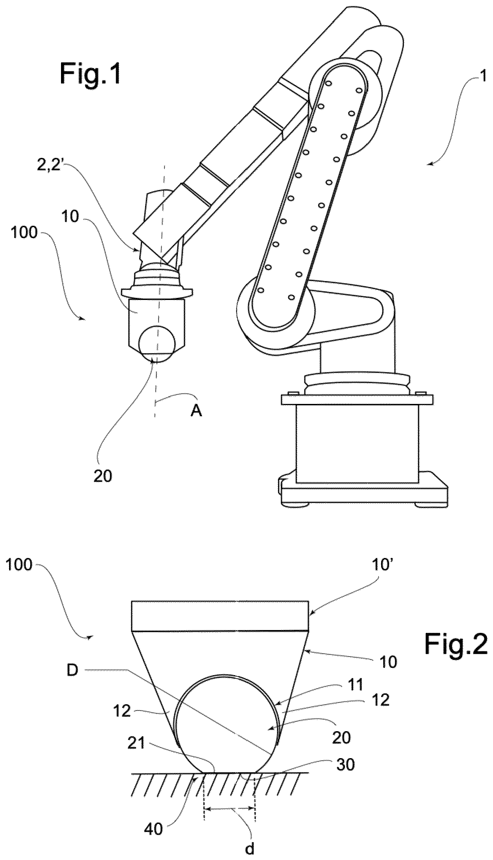

La figure 1 illustre une vue d'un robot **1,** en particulier ici d'un cobot muni d'un bras **2** de robot **1.** En d'autres, termes, il s'agit dans ce mode de réalisation d'un robot **1** dit « collaboratif », c'est-à-dire travaillant dans un espace partagé et configuré pour être en interaction avec une personne. Le cobot est généralement dépendant des mouvements de l'opérateur. Dans le cadre d'une application à une chaîne de production automatisée par exemple, plusieurs cobots sont susceptibles d'intervenir conjointement avec des opérateurs humains, ou à proximité immédiate desdits opérateurs.

Le robot **1** présente, à une extrémité distale de son bras **2** articulé, une interface configurée pour assurer la fixation d'un outil **100** de marouflage. Ses caractéristiques, notamment dimensionnelles, pourront varier en fonction de la forme et des dimensions des outils **100** à saisir.

L'outil **100** de marouflage présente également une interface **10'** pour assurer sa fixation au bras **2** du robot **1.**

L'outil **100** de marouflage se compose notamment d'un support **10** s'étendant axialement suivant un axe de référence **A** entre une extrémité proximale **10A** et une extrémité distale **10B.** L'interface **10'** de l'outil **100** de marouflage est formée par l'extrémité proximale **10A.** L'interface interface **10'** d'assemblage de l'outil **100** de marouflage au bras **2** du robot **1** est configurée de sorte qu'en position assemblée de l'outil **100** de marouflage sur le bras **2** du robot **1** comme illustré sur la figure 1, l'axe de référence **A** est coaxial avec un axe de référence d'une portion d'extrémité **2'** de référence du bras **2** articulé du robot **1.**

La fonction de l'outil **100** de marouflage est de maroufler des surfaces, par exemple de plis pré-imprégnés. L'utilisation d'outils **100** relativement larges tels que des rouleaux sont utilisés de sorte à pouvoir notamment s'étendre suivant une dimension dans le plan de la surface à maroufler suffisamment large pour pouvoir, durant son mouvement contre la surface à maroufler, couvrir toute l'étendue d'une bulle d'air moyenne prise dans le pli de pré-imprégné. Un autre avantage de couvrir avec l'outil **100,** dimension dans le plan de la surface à maroufler suffisamment large est de pouvoir couvrir une surface à maroufler relativement grande et ainsi gagner en efficacité et en rendement. Toutefois, de tels rouleaux ne permettent pas un mouvement complexe du fait de leur forme qui limite les gestes, mais aussi du fait que de tels mouvements risquent cisailler la matière et potentiellement l'endommager.

Dans le cadre de la présente invention et contre les idées reçues, l'outil **100** de marouflage est pourvu d'une boule **20** de marouflage, laquelle est retenue par le support **10** au niveau de son extrémité distale **10B** de façon à pouvoir tourner. La boule **20** de marouflage présente une enveloppe sphérique de diamètre **D,** la boule **20** de marouflage étant maintenu par le support **10** de sorte à ce que son centre est situé sur un point de l'axe de référence **A** de l'outil **100.**

En particulier, la boule **20** de marouflage est enchâssée dans une cage **11** définie par le support **10** de façon à pouvoir tourner dans la cage **11** sans la quitter. De cette manière, la boule **20** de marouflage est montée libre en rotation par rapport au support **10.** La cage **11** est formée monobloc avec le support **10,** c'est-à-dire d'un seul tenant.

Durant le marouflage, la boule **20** de marouflage vient en contact et en appui contre la surface à maroufler **30,** son frottement avec la surface à maroufler **30** lui permettant à la boule **20** de marouflage de rouler lorsque ladite boule **20** de marouflage est déplacée contre elle.

Afin d'éviter un contact ponctuel, ou s'en rapprochant, de la boule **20** de marouflage avec la surface à maroufler **30,** la boule **20** de marouflage est configurée de sorte que, pour une pression prédéterminée de la boule **20** de marouflage sur une surface à maroufler **30,** la boule **20** de marouflage se déforme élastiquement pour garantir un contact surfacique formant une surface d'appui **21** de la boule **20** de marouflage contre la surface à maroufler **30.** Une telle position de la boule **20** de marouflage en contact et en appui contre la surface à maroufler **30** est illustré en détail sur la figure 2.

Lors de la mise en œuvre d'une opération de marouflage d'une surface à maroufler **30** par l'outil 100, la boule **20** de marouflage est ainsi pressée contre ladite surface à maroufler **30** de façon suffisamment importante pour obtenir une interface de contact **40** entre la boule **20** de marouflage et la surface à maroufler **30** ayant une aire suffisamment grande pour que le marouflage soit efficace, mais suffisamment faible pour que cette pression, d'une part ne détériore par la matière marouflée, et d'autre part, n'entrave pas la boule **20** c'est-à-dire qu'elle ne gêne pas sa rotation.

En considérant que l'interface de contact **40** entre la boule **20** de marouflage et la surface à maroufler **30** présente une forme globalement cylindrique, de diamètre d et de rayon **r,** son aire est égale à $\pi.r^2$, soit en fonction de son diamètre D : $\pi.\left(\frac{D}{2}\right)^2$ ou encore $\pi.\frac{D^2}{4}$.

Ainsi, lors de l'opération de marouflage, l'on déplace la boule **20** de marouflage sur la surface à maroufler **30** en maintenant une interface de contact **40** entre la boule **20** de marouflage et la surface à maroufler **30** ayant une aire :

- supérieure à 5% de la surface d'un disque délimité par un grand cercle de la boule **20** de marouflage, soit 5% de ( $\pi\frac{D^2}{4}$ ),
- de préférence, supérieure à 10% de la surface du disque délimité par la grand cercle de la boule **20** de marouflage, soit 10% de ( $\pi\frac{D^2}{4}$ ) et/ou :
- inférieure à 90% de la surface d'un disque délimité par un grand cercle de la boule **20** de marouflage, soit 90% de ( $\pi\frac{D^2}{4}$ ),
- de préférence, inférieure à 30% de la surface d'un disque délimité par un grand cercle de la boule **20** de marouflage, soit 30% de ( $\pi\frac{D^2}{4}$ ).

On rappelle qu'en géométrie, on désigne par le vocable « grand cercle » un cercle tracé à la surface d'une sphère qui a le même diamètre qu'elle.

Plusieurs paramètres de l'outil permettent une telle mise en œuvre et garantir ainsi l'efficacité du marouflage.

Suivant un paramètre, la boule **20** de marouflage comprend un diamètre **D** supérieur ou égal à 20mm, de préférence supérieur ou égal à 30mm et/ou inférieur ou égal à 60mm, de préférence inférieur ou égal à 50mm. On obtient une boule **20** de marouflage présentant une dimension suffisamment grande pour que l'interface de contact **40** obtenue entre la boule **20** de marouflage et la surface à maroufler **30** à une pression prédéterminée n'endommage pas la matière marouflée et garantisse un marouflage efficace. De telles dimensions garantissent ainsi un bon compromis entre l'accessibilité de l'outil sur les formes variables de la surface à maroufler **30** et la l'interface de contact **40** obtenue entre la boule **20** de marouflage et la surface à maroufler **30.**

Idéalement, la pression prédéterminée pour déformer élastiquement la boule **20** de marouflage est supérieure ou égale à 10 N, de préférence supérieure ou égale à 40 N et/ou inférieure ou égale à 200 N, de préférence inférieure ou égale à 100 N.

Durant la mise en œuvre du procédé, on peut faire varier cette pression, ou bien la maintenir constante suivant la zone de la surface à maroufler, ou bien suivant la géométrie de la surface.

Dans un cas, on déplace la boule **20** de marouflage sur la surface à maroufler **30** en maintenant constant une composante normale d'une résultante des efforts exercés par la boule **20** de marouflage sur la surface à maroufler **30** ou sans faire varier la composante normale de la résultante des efforts exercés par la boule **20** de marouflage sur la surface à maroufler **30** dans des proportions supérieures à 5%.

On notera qu'un pont d'appui par boule **20** de marouflage sera normal à la surface à maroufler **30** même si l'orientation de l'outil **100** est différente et/ou variable de l'outil **100** par rapport au bras **2** de robot **1.** De cette manière, il n'est pas nécessaire d'employer un robot très précis dans l'orientation de l'outil **100.** La forme sphérique de la boule de marouflage offre ainsi une tolérance plus importante.

Dans un autre cas, on peut choisir de vouloir déplacer la boule **20** de marouflage sur la surface à maroufler **30** en faisant varier la composante normale de la résultante des efforts exercés par la boule **20** de marouflage sur la surface à maroufler **30,** par exemple dans des proportions supérieures à 20%. C'est notamment le cas lorsque la boule **20** de marouflage évolue sur plusieurs surfaces à maroufler **30** de différentes natures.

On notera que le robot est muni d'un capteur d'efforts. Le robot est commandé de préférence de sorte que la résultante des la composante normale de la résultante des efforts exercés par la boule **20** de marouflage sur la surface à maroufler **30** est le plus constant possible. On a toujours intérêt à rendre l'effort variable, effort qui va dépendre en particulier du procédé mis en œuvre, comme par exemple le nombre de couches, la surface de contact, etc. Ces points sont surtout liés au procédé, pour valider que l'on arrive bien à valider toute la surface de la pièce ave l'effort désiré.

Suivant un autre paramètre, la structure de la boule **20** de marouflage, de même que le ou les maté-

riau(x) qui la constitue influe sur la l'interface de contact **40** entre la boule **20** de marouflage et la surface à maroufler **30** obtenue à une pression donnée.

Dans ce mode de réalisation, comme cela est illustré en détail sur les figures en coupe 5 et 6, la boule **20** de marouflage comprend un noyau **22** et une coque **23** enveloppant le noyau **22**. Dans ce mode de réalisation, la boule **20** de marouflage est constituée du noyau 22 et de la coque **23** formant une enveloppe semi-rigide, le noyau **22** présentant une dureté qui peut varier en fonction de l'application.

Le noyau **22** de la boule **20** de marouflage présente une dureté Shore supérieure ou égale à 15A, de préférence supérieure ou égale à 25A et/ou inférieure ou égale à 50A, de préférence inférieur ou égal à 40A. Le noyau **22** de la boule **20** de marouflage peut être composé par exemple d'au moins un élastomère et/ou à base de silicone.

Le noyau **22** de la boule **20** de marouflage peut être injecté à l'intérieur de la coque **23**, ou bien surmoulé par la coque **23**.

La coque **23** quant à elle peut être réalisée par exemple à partir de matériau(x) thermoplastique(s), voire constituée intégralement de matériau(x) thermoplastique(s). On peut citer par exemple le polypropylène (PP) ou l'acrylonitrile butadiène styrène (ABS) ou encore le celluloïd. Bien entendu, d'autres matériaux pourraient être envisagés.

La coque **23** de la boule **20** de marouflage est de préférence injectée puis remplie, ou bien formée par un surmoulage sur le noyau **22**.

Pour garantir un bon rendement du marouflage tout en préservant la matière de la surface à maroufler **30** de tout endommagement on veillera à ce que la boule **20** de marouflage ne glisse pas sur la surface à maroufler **30** de sorte que l'on déplace la boule **20** de marouflage sur la surface à maroufler **30** en faisant rouler la boule **20** de marouflage sur la surface à maroufler **30**.

Le fait que la boule 20 de marouflage soit formée d'un noyau **22** enveloppé dans une coque **23**, il est possible d'obtenir facilement une boule **20** de marouflage élastiquement déformable tout en présentant une surface formant une garniture de friction pour rouler sur la surface à maroufler **30** lorsqu'elle est déplacée contre elle.

Dans le même temps, il faut veiller à ce que la boule **20** de marouflage puisse tourner dans son logement formé par la cage **11** de façon que la surface de la boule **20** de marouflage ne soit pas de nature à contraindre la rotation de la boule **20** de marouflage dans la cage **11.** Pour ce faire, le support **10** présente une surface de contact avec la boule **20** de marouflage présentant avec la boule **20** de marouflage un coefficient de frottement sec statique supérieur ou égal à 0,1 et/ou inférieur ou égal à 0,4, de préférence inférieur ou égal à 0,2.

La cage **11** est pourvue d'une pluralité de griffes de maintien **12** réparties de façon homogène autour de la boule **20** de marouflage. Chacune des griffes de maintien **12** sont espacées deux à deux par des interstices **13**. Cela permet notamment de limiter la surface de contact entre la boule **20** de marouflage et le support **10**.

Les griffes de maintien **12** sont déformables élastiquement. De cette manière, la cage **11** est élastiquement déformable de sorte que la boule **20** de marouflage est enchâssée par emboîtement élastique et de façon amovible dans ladite cage **11**. Les griffes de maintien **12** permettent ainsi une facilité de remplacement de boule **20** de marouflage dans le support de l'outil **100** associé et facilite les opérations de maintenance, par exemple en cas d'usure de la boule **20** de marouflage, ou simplement pour changer la nature de la boule **20** de marouflage.

Le support **10** comporte de préférence plus de quatre griffes de maintien **12** et/ou, moins de dix griffes de maintien **12** pour former la cage **11**. Ces valeurs représentent un bon compromis entre le maintien de la boule **20** de marouflage dans sa cage **11** et l'élasticité desdites griffes de maintien **12**.

Une possibilité pour diminuer la surface de frottement entre la boule **20** de marouflage et le support **10,** est de configuré que cette surface ne s'étende pas suivant une enveloppe purement sphérique, par exemple en comportant des ondulations. C'est le cas notamment si la surface de frottement entre la boule **20** de marouflage et le support **10** présente un aspect capitonné.

En complément ou en alternative, pour diminuer de façon substantielle la surface de frottement entre la boule **20** de marouflage et le support **10,** sans réduire la résistance mécanique de la cage et son action de retenue de la boule **20** de marouflage dans son logement, la cage **11** peut être équipée des corps roulants (non illustrés sur les figures) de sorte à ce que lesdits corps roulants roulent contre une piste portée par la surface extérieure de la boule **20** de marouflage. Ces corps roulants peuvent être de différents types, par exemple des billes et/ou des aiguilles, et de différents matériau(x), par exemple constituée de métal ou métaux ou bien constituée de matériau(x) plastique(s). Dans une telle configuration, les corps roulants peuvent être logés dans des cavités **14** formant cage pour au moins l'un des corps roulants.

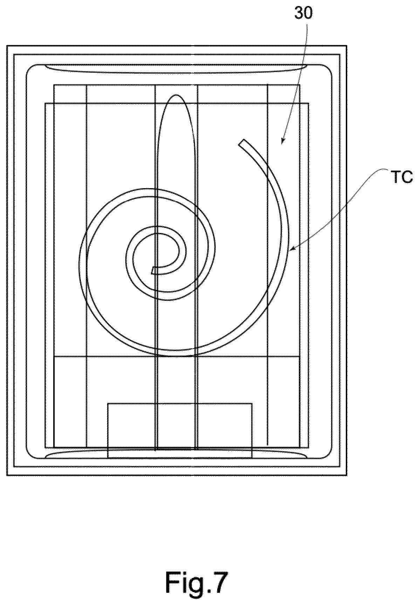

La figure 7 illustre un exemple de trajectoire **Tc** possible de l'outil de marouflage **20** contre une surface à maroufler **30,** qui est ici une trajectoire exclusivement courbe, la boule **20** de marouflage étant déplacée durant l'opération de marouflage sur la surface à maroufler **30** suivant cette trajectoire courbe **Tc,** en forme de spirale dans cet exemple.

L'outil **100** proposé dans cette solution technique est de type non vectoriel. Il peut donc effectuer des trajectoires linéaires, courbes/circulaires, servir d'appui ponctuel. Il augmente également la productivité dans le sens ou l'outil **100** n'a pas besoin de « décoller » la boule **20** de marouflage de la surface de drapage à maroufler 30 et de passer par une phase de retour à un début de trajectoire (déplacement pur).

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens et pour autant que lesdites combinaisons restent dans la cadre de l'invention tel que défini par les revendications.

## Revendications

1. Procédé de marouflage d'une surface à maroufler (30) par un outil (100) de marouflage comportant un support (10) et une boule (20) de marouflage retenue par le support (10) de façon à pouvoir tourner, la boule (20) de marouflage étant élastiquement déformable, le procédé de marouflage étant **caractérisé en ce que** l'on déplace la boule (20) de marouflage sur la surface à maroufler (30) en maintenant une interface de contact (40) entre la boule (20) de marouflage et la surface à maroufler (30) ayant une aire supérieure à 5% ( $\pi \dfrac{D^2}{4}$ ), de préférence supérieure à 10% ( $\pi \dfrac{D^2}{4}$ ) et/ou inférieure à 90% ( $\pi \dfrac{D^2}{4}$ ), de préférence inférieure à 30% ( $\pi \dfrac{D^2}{4}$ ), où D est le diamètre de la boule (20) de marouflage.

2. Procédé de marouflage selon la revendication 1, **caractérisé en ce que** l'on déplace la boule (20) de marouflage sur la surface à maroufler (30) suivant une trajectoire présentant au moins une portion courbe (Tc).

3. Procédé de marouflage selon l'une quelconque des revendications 1 ou 2, **caractérisé en ce que** l'on déplace la boule (20) de marouflage sur la surface à maroufler (30) en faisant rouler la boule (20) de marouflage sur la surface à maroufler (30).

4. Procédé selon l'une quelconque des revendications précédentes, **caractérisé en ce que** l'on déplace la boule (20) de marouflage sur la surface à maroufler (30) en maintenant constant une composante normale d'une résultante des efforts exercés par la boule (20) de marouflage sur la surface à maroufler (30) ou sans faire varier la composante normale de la résultante des efforts exercés par la boule (20) de marouflage sur la surface à maroufler (30) dans des proportions supérieures à 5%.

5. Procédé selon l'une quelconque des revendications précédentes, **caractérisé en ce que** pour déplacer la boule (20) de marouflage, on guide la boule (20) de marouflage à l'aide d'une cage (11) de l'outil (100) de marouflage enchâssant la boule (20) de marouflage.

6. Outil (100) de marouflage comprenant un support (10) et une boule (20) de marouflage retenue par le support (10) de façon à pouvoir tourner, la boule (20) de marouflage étant configurée de sorte que pour une pression prédéterminée de la boule (20) de marouflage sur une surface à maroufler (30), la boule (20) de marouflage se déforme élastiquement pour garantir un contact surfacique formant une surface d'appui (21) de la boule (20) de marouflage contre la surface à maroufler (30).

7. Outil (100) de marouflage selon la revendication 6, **caractérisé en ce que** la boule (20) de marouflage est enchâssée dans une cage (11) définie par le support (10) de façon à pouvoir tourner dans la cage (11) sans la quitter.

8. Outil (100) de marouflage selon la revendication 7, **caractérisé en ce que** la cage (11) comprend une pluralité de griffes de maintien (12) réparties de façon homogène autour de la boule (20) de marouflage espacées deux à deux par des interstices (13).

9. Outil (100) de marouflage selon la revendication 8, **caractérisé en ce que** les griffes de maintien (12) sont déformables élastiquement.

10. Outil (100) de marouflage selon l'une quelconque des revendications 7 à 9, **caractérisé en ce que** la cage (11) est élastiquement déformable de sorte que la boule (20) de marouflage est enchâssée par emboîtement élastique et de façon amovible dans ladite cage (11).

11. Outil (100) de marouflage selon l'une quelconque des revendications 7 à 10, **caractérisé en ce que** le support (10) présente, de préférence à une extrémité proximale (10A) opposée à la cage (11), une interface de fixation (10') à un bras (2) de robot (1).

12. Outil (100) de marouflage selon l'une quelconque des revendications 7 à 11, **caractérisé en ce que** la cage (11) comporte des corps roulants de sorte à rouler contre une piste portée par une surface de la boule (20) de marouflage.

13. Outil (100) de marouflage selon l'une quelconque des revendications 7 à 12, **caractérisé en ce que** le support (10) est constitué d'un matériau thermoplastique.

14. Outil (100) de marouflage selon l'une quelconque des revendications 7 à 13, **caractérisé en ce que** la boule (20) de marouflage comprend un noyau (22) et une coque (23), de préférence en matériau(x) thermoplastique(s), enveloppant le noyau (22).

15. Outil (100) de marouflage selon la revendication 14, **caractérisé en ce que** le noyau (22) de la boule (20) de marouflage présente une dureté Shore supérieure ou égale à 15A, de préférence supérieure ou égale à 25A et/ou inférieure ou égale à 50A, de préférence inférieure ou égale à 40A, le noyau (22) de la boule (20) de marouflage étant composé de préférence à partir d'élastomère(s) ou de silicone.

16. Outil (100) de marouflage selon l'une quelconque des revendications 7 à 15, **caractérisé en ce que** la boule (20) de marouflage comprend un diamètre (D) supérieur ou égal à 20mm, de préférence supérieur ou égal à 30mm et/ou inférieur ou égal à 60mm, de préférence inférieur ou égal à 50mm.

17. Outil (100) de marouflage selon l'une quelconque des revendications 7 à 16, **caractérisé en ce que** la pression prédéterminée pour déformer élastiquement la boule (20) de marouflage est supérieure ou égale à 10 N, de préférence supérieure ou égale à 40 N et/ou inférieure ou égale à 200 N, de préférence inférieure ou égale à 100 N.

18. Bras (2) de robot (1), par exemple pour un cobot, **caractérisé en ce qu'**il comprend un outil (100) de marouflage selon l'une quelconque des revendications 7 à 17.

**Patentansprüche**

1. Verfahren zum Glattziehen einer glattzuziehenden Oberfläche (30) mittels eines Glattziehwerkzeugs (100) mit einem Träger (10) und einer Glattziehkugel (20), die durch den Träger (10) derart gehalten wird, um sich drehen zu können, wobei die Glattziehkugel (20) elastisch verformbar ist, wobei das Verfahren zum Glattziehen, **dadurch gekennzeichnet ist, dass** die Glattziehkugel (20) über die glattzuziehende Oberfläche (30) bewegt wird, wobei eine Berührungsfläche (40) zwischen der Glattziehkugel (20) und der glattzuziehenden Oberfläche (30), die einen Flächeninhalt von größer als 5 %, ( $\pi \frac{D^2}{4}$ ) vorzugsweise größer als 10 % ( $\pi \frac{D^2}{4}$ ) und/oder kleiner als 90 %, ( $\pi \frac{D^2}{4}$ ) vorzugsweise kleiner als 30 % ( $\pi \frac{D^2}{4}$ ) hat, wobei D der Durchmesser der (20) Glattziehkugel ist, aufrechterhalten wird.

2. Verfahren zum Glattziehen nach Anspruch 1, **dadurch gekennzeichnet, dass** die Glattziehkugel (20) auf der glattzuziehenden Oberfläche (30) einer Trajektorie folgend, die mindestens einen gekrümmten Abschnitt (Tc) aufweist, bewegt wird.

3. Verfahren zum Glattziehen nach einem der Ansprüche 1 oder 2, **dadurch gekennzeichnet, dass** die Glattziehkugel (20) auf der glattzuziehenden Oberfläche (30) bewegt wird, indem die Glattziehkugel (20) auf der glattzuziehenden Oberfläche (30) gewalzt wird.

4. Verfahren nach einem der vorstehenden Ansprüche, **dadurch gekennzeichnet, dass** die Glattziehkugel (20) auf der glattzuziehenden Oberfläche (30) bewegt wird, wobei eine Normalkomponente einer Resultierenden aus Kräften, die durch die Glattziehkugel (20) auf die glattzuziehende Oberfläche (30) ausgeübt werden, aufrechterhalten wird, oder ohne ein Variieren der Normalkomponente der Resultierenden aus Kräften, die auf die Glattziehkugel (20) auf der glattzuziehenden Oberfläche (30) ausgeübt werden, in Proportionen von größer als 5 %.

5. Verfahren nach einem der vorstehenden Ansprüche, **dadurch gekennzeichnet, dass** zum Bewegen der Glattziehkugel (20) die Glattziehkugel (20) mittels eines Gehäuses (11) des Glattziehwerkzeugs (100), in das die Glattziehkugel (20) eingebettet ist, geführt wird.

6. Glattziehwerkzeug (100), umfassend einen Träger (10) und eine Glattziehkugel (20), die durch den Träger (10) gehalten wird, um sich drehen zu können, wobei die Glattziehkugel (20) konfiguriert ist, sodass bei einem vorbestimmten Druck der Glattziehkugel (20) auf eine glattzuziehende Oberfläche (30) sich die Glattziehkugel (20) elastisch verformt, zum Gewährleisten einer oberflächigen Berührung, die eine Auflagefläche (21) der Glattziehkugel (20) gegen die glattzuziehende Oberfläche (30) ausbildet.

7. Glattziehwerkzeug (100) nach Anspruch 6, **dadurch gekennzeichnet, dass** die Glattziehkugel (20) in einem Gehäuse (11) eingebettet ist, das durch den Träger (10) definiert wird, um sich in dem Gehäuse (11) drehen zu können, ohne dieses zu verlassen.

**8.** Glattziehwerkzeug (100) nach Anspruch 7, **dadurch gekennzeichnet, dass** das Gehäuse (11) eine Vielzahl von Halteklemmen (12), die gleichmäßig um die Glattziehkugel (20), paarweise beabstandet durch Lücken (13) verteilt sind, umfasst.

**9.** Glattziehwerkzeug (100) nach Anspruch 8, **dadurch gekennzeichnet, dass** die Halteklemmen (12) elastisch verformbar sind.

**10.** Glattziehwerkzeug (100) nach einem der Ansprüche 7 bis 9,
**dadurch gekennzeichnet, dass** das Gehäuse (11) elastisch verformbar ist, sodass die Glattziehkugel (20) durch elastische Einlassung in das Gehäuse (11) eingebettet und aus dem Gehäuse entnehmbar ist.

**11.** Glattziehwerkzeug (100) nach einem der Ansprüche 7 bis 10,
**dadurch gekennzeichnet, dass** der Träger (10) vorzugsweise an einem proximalen Ende (10A) gegenüber dem Gehäuse (11) eine Befestigungsfläche (10') an einem Arm (2) des Roboters (1) aufweist.

**12.** Glattziehwerkzeug (100) nach einem der Ansprüche 7 bis 11,
**dadurch gekennzeichnet, dass** das Gehäuse (11) Walzkörper vorweist, um gegen eine Bahn, die durch eine Oberfläche der Glattziehkugel (20) gestützt wird, zu walzen.

**13.** Glattziehwerkzeug (100) nach einem der Ansprüche 7 bis 12,
**dadurch gekennzeichnet, dass** der Träger (10) aus einem thermoplastischen Material besteht.

**14.** Glattziehwerkzeug (100) nach einem der Ansprüche 7 bis 13,
**dadurch gekennzeichnet, dass** die Glattziehkugel (20) einen Kern (22) und einer Hülle (23), vorzugsweise aus thermoplastischem/n Material(ien), die den Kern (22) umschließen.

**15.** Glattziehwerkzeug (100) nach Anspruch 14,
**dadurch gekennzeichnet, dass** der Kern (22) der Glattziehkugel (20) eine Shore-Härte von größer als oder gleich 15 A, vorzugsweise größer als oder gleich 25 A und/oder kleiner als oder gleich 50 A, vorzugsweise kleiner als oder gleich 40 A aufweist, wobei der Kern (22) der Glattziehkugel (20) vorzugsweise anhand von Elastomer(en) oder von Silikon gebildet ist.

**16.** Glattziehwerkzeug (100) nach einem der Ansprüche 7 bis 15,
**dadurch gekennzeichnet, dass** die Glattziehkugel (20) einen Durchmesser (D) von größer als oder gleich 20 mm, vorzugsweise größer als oder gleich 30 mm und/oder kleiner als oder gleich 60 mm, vorzugsweise kleiner als oder gleich 50 mm aufweist.

**17.** Glattziehwerkzeug (100) nach einem der Ansprüche 7 bis 16,
**dadurch gekennzeichnet, dass** der vorbestimmte Druck zum elastischen Verformen der Glattziehkugel (20) größer als oder gleich 10 N, vorzugsweise größer als oder gleich 40 N und/oder kleiner als oder gleich 200 N, vorzugsweise kleiner als oder gleich 100 N ist.

**18.** Arm (2) eines Roboters (1), beispielsweise für einen Cobot,
**dadurch gekennzeichnet, dass** er ein Glattziehwerkzeug (100) nach einem der Ansprüche 7 bis 17 umfasst.

**Claims**

**1.** Marouflage method for a surface (30) to be smoothed with a marouflage tool (100) comprising a support (10) and a marouflage ball (20) held rotatably by the support (10), the marouflage ball (20) being elastically deformable, the marouflage method being **characterized in that** the marouflage ball (20) is moved over the surface (30) to be smoothed while maintaining a contact interface (40) between the marouflage ball (20) and the surface (30) to be smoothed having an area greater than 5% ( $\pi \frac{D^2}{4}$ ), preferably greater than 10% ( $\pi \frac{D^2}{4}$ ) and/or less than 90% ( $\pi \frac{D^2}{4}$ ), preferably less than 30% ( $\pi \frac{D^2}{4}$ ), where D is the diameter of the marouflage ball (20).

**2.** Marouflage method according to claim 1, **characterized in that** the marouflage ball (20) is moved over the surface (30) to be smoothed along a trajectory having at least one curved portion (Tc).

**3.** Marouflage method according to either of claims 1 or 2,
**characterized in that** the marouflage ball (20) is moved over the surface (30) to be smoothed by rolling the marouflage ball (20) over the surface (30) to be smoothed.

**4.** Method according to any of the preceding claims, **characterized in that** the marouflage ball (20) is moved over the surface (30) to be smoothed while maintaining constant a normal component of a resultant of the forces exerted by the marouflage ball (20) on the surface (30) to be smoothed or without varying the normal component of the resultant of the forces exerted by the marouflage ball (20) on the surface (30) to be smoothed by more than 5%.

5. Method according to any of the preceding claims, **characterized in that,** in order to move the marouflage ball (20), the marouflage ball (20) is guided by means of a cage (11) of the marouflage tool (100) encasing the marouflage ball (20).

6. Marouflage tool (100) comprising a support (10) and a marouflage ball (20) held rotatably by the support (10), the marouflage ball (20) being configured so that, for a predetermined pressure of the marouflage ball (20) on a surface (30) to be smoothed, the marouflage ball (20) deforms elastically to ensure surface contact forming a bearing surface (21) of the marouflage ball (20) against the surface (30) to be smoothed.

7. Marouflage tool (100) according to claim 6, **characterized in that** the marouflage ball (20) is encased in a cage (11) defined by the support (10) so as to be able to rotate in the cage (11) without leaving it.

8. Marouflage tool (100) according to claim 7, **characterized in that** the cage (11) comprises a plurality of retaining claws (12) evenly distributed around the marouflage ball (20) and spaced apart in pairs by gaps (13).

9. Marouflage tool (100) according to claim 8, **characterized in that** the retaining claws (12) are elastically deformable.

10. Marouflage tool (100) according to any of claims 7 to 9,
**characterized in that** the cage (11) is elastically deformable so that the marouflage ball (20) is removably and elastically encased in said cage (11).

11. Marouflage tool (100) according to any of claims 7 to 10,
**characterized in that** the support (10) has, preferably at a proximal end (10A) opposite the cage (11), an interface (10') for attachment to an arm (2) of a robot (1).

12. Marouflage tool (100) according to any of claims 7 to 11,
**characterized in that** the cage (11) comprises rolling bodies so as to roll against a track carried by a surface of the marouflage ball (20).

13. Marouflage tool (100) according to any of claims 7 to 12,
**characterized in that** the support (10) is composed of a thermoplastic material.

14. Marouflage tool (100) according to any of claims 7 to 13,
**characterized in that** the marouflage ball (20) comprises a core (22) and a shell (23), preferably made of thermoplastic material(s), enveloping the core (22).

15. Marouflage tool (100) according to claim 14, **characterized in that** the core (22) of the marouflage ball (20) has a Shore hardness greater than or equal to 15A, preferably greater than or equal to 25A and/or less than or equal to 50A, preferably less than or equal to 40A, the core (22) of the marouflage ball (20) preferably being composed of elastomer(s) or silicone.

16. Marouflage tool (100) according to any of claims 7 to 15,
**characterized in that** the marouflage ball (20) comprises a diameter (D) greater than or equal to 20 mm, preferably greater than or equal to 30 mm and/or less than or equal to 60 mm, preferably less than or equal to 50 mm.

17. Marouflage tool (100) according to any of claims 7 to 16,
**characterized in that** the predetermined pressure for elastically deforming the marouflage ball (20) is greater than or equal to 10 N, preferably greater than or equal to 40 N and/or less than or equal to 200 N, preferably less than or equal to 100 N.

18. Arm (2) of a robot (1), for example for a cobot, **characterized in that** it comprises a marouflage tool (100) according to any of claims 7 to 17.

Fig.1

Fig.2

Fig.3

20

10B

12

10

13

13

10A

20

Fig.4

13

14

13

11

12

12

13

-12-

-12-

10

13

13

Fig.5

Fig.6

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013007382 A1